Europäisches Patentamt

European Patent Office

Office européen des brevets

(11) Publication number: **0 271 898**
**A1**

# (12) EUROPEAN PATENT APPLICATION

(21) Application number: 87118663.1

(22) Date of filing: 16.12.87

(51) Int. Cl.⁴: **F16H 1/36**

(30) Priority: 17.12.86 DK 6104/86

(43) Date of publication of application:
**22.06.88 Bulletin 88/25**

(84) Designated Contracting States:
**AT BE CH DE ES FR GB GR IT LI LU NL SE**

(71) Applicant: **AKTIESELSKABET DE DANSKE SUKKERFABRIKKER**
**Langebrogade 5**
**DK-1411 Copenhagen K(DK)**

(72) Inventor: **Schoubye, Flemming Erik**
**202 Maglehojvej**
**DK-4983 Dannemare(DK)**

(74) Representative: **Vossius & Partner**
**Siebertstrasse 4 P.O. Box 86 07 67**
**D-8000 München 86(DE)**

(54) **Gearing comprising an input shaft and an output shaft coaxially mounted.**

(57) A gearing comprising an input shaft (10) and an output shaft (11) coaxially mounted and permanently connected to an input gear (12) and an output gear (13) respectively. The input gear (12) and the output gear (13) cooperate with a number of auxiliary gear sets (15, 16), with each gear being in engagement with the input gear (12) and output gear (13) respectively, as well as an auxiliary shaft (14) whereon said sets of auxiliary gears (15, 16) are mounted. At least one of the auxiliary gears (15, 16) in each set of auxiliary gears is mounted on the auxiliary shaft (14) by means of a friction clutch (26). The friction clutch ensures an automatic setting of the sets of auxiliary gears in relation to the input gear and the output gear.

Fig. 2

EP 0 271 898 A1

Xerox Copy Centre

## Gearing comprising an input shaft and an output shaft coaxially mounted

The invention relates to a gearing comprising an input shaft and an output shaft coaxially mounted and permanently connected to an input gear and an output gear respectively, where the input gear and the output gear cooperate with a number of auxiliary gear sets, each set comprising two auxiliary gears, with each gear being in engagement with the input gear and output gear respectively, as well as an auxiliary shaft whereon said sets of auxiliary gears are mounted.

A gearing of the type mentioned in the preamble requires a very precise manufacture and setting of the individual gears in the gearing, since no set of gears may bear the main load alone. As a result it is relatively expensive to manufacture such a gearing or similar gearings, where the individual gear of several gears permanently connected to each other are in engagement with several gears simultaneously.

The US-PS 3,530,733 discloses a gear with an input shaft and an output shaft permanently connected to an input gear and an output gear respectively. The input gear and the output gear are coaxially mounted and cooperate with sets of two auxiliary gears mounted on an elastic auxiliary shaft. During operation the auxiliary gears are adjusted in relation to the input gear and the output gear due to the elasticity of the auxiliary shaft, since said shaft assumes a corresponding state of tension. The state of tension may vary from one auxiliary shaft to the other and results in the corresponding sets of auxiliary gears being subjected to a different extend of wear. Extensive wear results in larger tensions in the corresponding shaft which again result in more extensive wear. In due time this unequal distribution gives rise to undesirable vibrations, said vibrations causing great disadvantages, especially at high speeds.

The object of the invention is to provide a gearing of the above type, said gearing being comparatively easy to set and inexpensive to manufacture.

According to the invention the gearing is characterised in that at least one auxiliary gear in each set of auxiliary gears is mounted on the auxiliary shaft by means of a friction clutch.

Thus an automatic and equal setting of the sets of auxiliary gears is ensured, so that the manufacture of the gears is comparatively inexpensive and the entire gearing has a comparatively long life without excessive wear and the resulting disadvantages. The gear mounted on the auxiliary shaft by means of a friction clutch slips on the said auxiliary shaft, if the load exceeds a predetermined value during the transfer of a turque larger than the maximum torque of the clutch. The gear slipping during an overload continues until the load is distributed to the other gears. The distribution of the load also results in the auxiliary shafts being subjected to the same torque and the individual gear being subjected to a reduced load. Thus the gear can be rendered narrower compared to e.g. a gear in a traditional gearing with only one set of auxiliary gears and auxiliary shaft. As a result the dimensions of the gearing in question can also be rendered narrower seen in the axial direction. Moreover, the employment of a friction clutch is a safeguard against overload.

According to the invention the sets of auxiliary gears are mounted with the same mutual angular distance around the common axis of rotation of the input shaft and the output shaft and along a circle concentric therewith. As a result, the movable parts of the gearing are well balanced.

Moreover, according to the invention, the auxiliary shaft of the auxiliary gears is permanently connected to a casing, said casing being rotatably mounted around the common axis of rotation of the input shaft and the output shaft and provided with a separate drive.

As a result, the gearing is especially suitable as e.g. a reduction gearing for a decanter centrifuge. In such an apparatus the danger of the individual gear being exposed to an overload is especially great, since there is a risk that the two mutually rotating parts of the decanter centrifuge lock up under certain circumferences. Consequently there is in reality no difference in speed between then. Owing to the friction clutch a reduction gearing according to the present invention is unable to transfer a torque larger than N times the torque necessary to cause a single friction clutch to slip (with N being the number of sets of auxiliary gears with corresponding auxiliary shafts). Furthermore, no auxiliary gear is subjected to a torque larger than the maximum torque starting the functioning of the friction clutch. In traditional reduction gearings for decanter centrifuges the genger of a gear breaking in such a situation is rather great. Such a break is completey avoided by using a gearing according to the present invention.

The invention is explained in greater detail below and with reference to the accompanying drawings, in which

Figure 1 shows a preferred embodiment of a gearing according to the invention used in a decanter centrifuge, and

Figure 2 shows an enlarged axial section through a preferred embodiment of a gearing used in a decanter centrifuge.

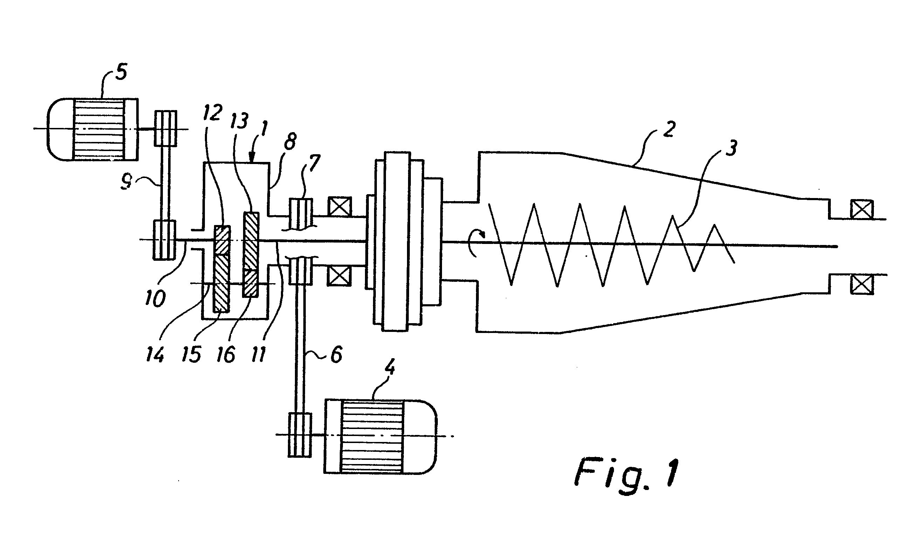

Figure 1 shows a gearing 1 together with a known decanter centrifuge comprising a drum 2 and a screw-shaped scraper 3 coaxially mounted and rotated with their respective speeds during operation, so that there arises a difference in speed between them. Motors 4, 5 drive the decanter centrifuge, the motor 4 cooperating with a pulley 7 via a belt drive 6. The pully 7 is permanently connected to the outer casing 8 of the gearing 2. Moreover the pulley 7 and the casing 8 are directly connected to the drum 2 in a manner known per se, optionally via a further gear mesh.

The other motor 5 drives an input shaft 10 of the gearing 1 by means of a belt drive 9. An output shaft 11 of the gearing 1 is coaxial to the input shaft 10 and is connected to the scraper 3 in a manner known per se, optionally via a further gear mesh.

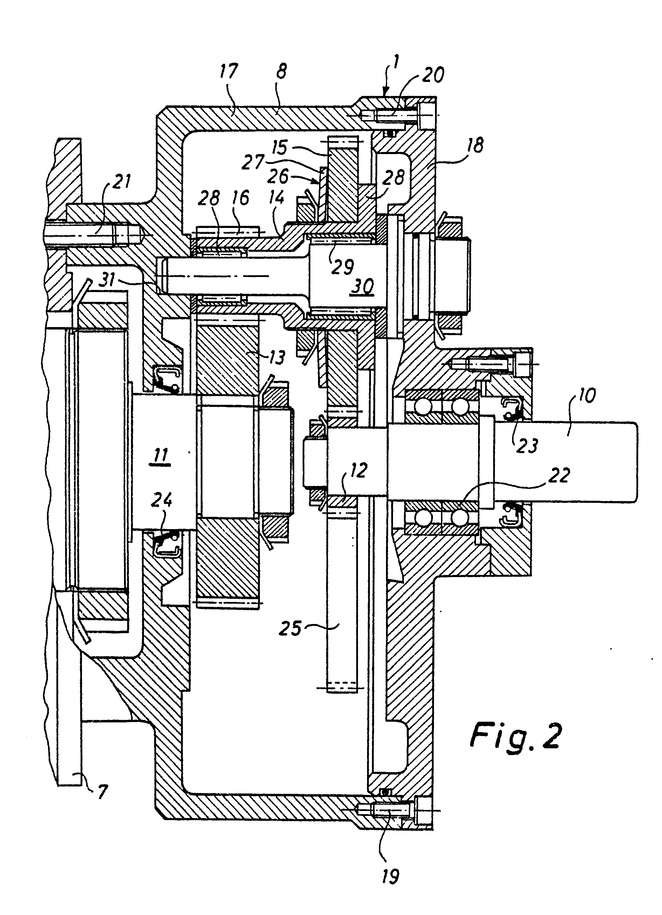

Inside the casing 8 of the gearing 1 the input shaft 10 is permanently connected to an input gear 12, and the output shaft 11 is permanently connected to an output gear 13. The output gear 13 is driven by the input gear 12 by means of three sets of auxiliary gears, each set comprising an auxiliary shaft 14 permanently connected to the casing 8 and two auxiliary gears 15, 16. These are mounted on the auxiliary shaft 14 and in engagement with the input gear 12 and the output gear 13 respectively. At least one of the auxiliary gears 15 and 16 is mounted on the auxiliary shaft 14 by means of a friction clutch or a sliding clutch not shown in Figure 1, but of a type known per se, like the one described in greater detail below with reference to Figure 2.

Figure 1 discloses only one set of auxiliary gears 15, 16 with a corresponding auxiliary shaft 14, while the preferred embodiment of the invention uses three such sets mounted at the same angular distance around the common axis of rotation of the input shaft 10 and the output shaft 11. Thus the auxiliary shafts 14 are parallel to the common axis of rotation and of the same radial distance from said axis.

When the motors 4, 5 are in operation, the motor 5 rotates the input gear 12 with a predetermined speed, said speed being transferred to the cooperating auxiliary gears 15 and subsequently to the other auxiliary gears 16. The friction clutches start to operate when an overload arises on the auxiliary gears in one or more sets of auxiliary gears with corresponding auxiliary shafts. The friction clutches continue to operate until the activating overload is removed. This occurs normally when the auxiliary gears are equally loaded by the input gear 12 or the output gear 13. When this hapens, the rotation of the auxiliary gears 15 and 16 is transferred to the output gear 13 and thus to the scrper 3 of the decanter centrifuge. Due to the fact that the auxiliary shafts 14 are permanently connected to the casing 8, a rotation of the casing 8 via the belt drive 6 and the corresponding pulley 7 results in a rotation of the auxiliary shafts around the common axis of rotation of the input shaft 10 and the output shaft 11. As a result, the rotation of the pulley 7 is also transferred to the output shaft 11 in such a way as to render the speed of the scraper 3 dependent on the speed of the drum 2 in a manner known per se. Thus a constant difference in speed is achieved - also in a manner known per se - between the scraper 3 and the drum 2 during normal operation.

A preferred embodiment of the gearing 1 is shown in Figure 2 in greater detail in an axial section through the casing 8 of the gearing and part of the pulley 7. The casing 8 comprises two parts 17 and 18 held together by means of bolts 19 and 20. The casing 8 is attached to the pulley 7 and thus to the decanter centrifuge by means of bolts 21. The input shaft 10 projects into the casing through the centre of the part 18 of the casing via suitable bearings 22 and sealing 23. The output shaft 11 projects coaxially to the input shaft out of the casing through the centre of the other part 17 of the casing via a suitable sealing 24. The input shaft 10 carries the input gear 12 on the end inside the casing 8, said input gear 12 being of a relatively small diameter. The teeth of said gear are in engagement with an auxiliary gear 15 being part of a first set of auxiliary gears 15 and 16 with a corresponding auxiliary shaft 14. As shown in the drawing, the input gear 12 is also in engagement with another auxiliary gear 25 mounted with an angular distance of 120° from the auxiliary gear 15 in relation to the axis of rotation of the input shaft 10. The auxiliary gear 15 is connected to the auxiliary shaft 14 by means of a friction clutch 26. The friction clutch 26 is a commonly known type and ensures that the auxiliary gears 15 rotates in relation to the auxiliary shaft 14 when subjected to an overload. As illustrated in the drawing, the friction clutch can comprise a disk spring 27 pressing the auxiliary gear 15 against a radially projecting flange 28 on the auxiliary shaft with a predetermined preload. The other auxiliary gear 16 is of relatively small diameter and forms an integral part of the auxiliary shaft 14 and is furthermore in engagement with the output gear 13. The output gear 13 is fastend to the inner end of the output shaft 11.

The various gears are mounted on their respective shafts by means of clamping screws, clamping washers and feather-key connections in a manner known per se. The auxiliary shaft 14 is in form of a bushing rotatably mounted in relation to an inner shaft 30 by means of needle bearings 28 and 29. The inner shaft 30 is permanently connected to the casing 8 by being attached to the casing part 18, cf. Figure 2, and receiving within a recess 31 in the other casing part 17. When separating the casing part 18 from the casing part 17 the shaft 30 as well as the corresponding set of auxiliary gears 15 and 16 with auxiliary shaft 14 consequently remain attached to the casing part 18 together with the input shaft 10 with the input gear 12. It is thus easy to exchange the input gear 12 and the auxiliary gear 15 with other gears in order to obtain a different transmission ration.

During the rotation of the input shaft 10 the input gear 12 rotates the auxiliary gear 15. Depending on the magnitude of the load the rotation of the auxiliary gear 15 is transferred to the auxiliary gear 16 and thus to the output gear 13. If the load of the auxiliary gear 15 is higher than a predetermined value, the friction clutch starts to operate, so that the auxiliary gear 15 rotates in relation to the auxilary shaft 14.

Such an overload occurs, when, for example, the load of the different sets of auxiliary gears with corresponding auxiliary shafts varies, e.g. as a result of a wrong setting of the meshing teeth in relation to each other. As soon as this setting is corrected - and this occurs automatically when using a friction clutch - the friction clutch 26 ensures that all auxiliary gears 15 in all sets of auxiliary gears are locked in relation to the auxiliary shaft 14.

The gearing 1 is here described together with a decanter centrifuge, but can, of course also be used for other purposes. It is, however, especially suitable for use together with a decanter centrifuge, also because the overload in a decanter centrifuge can reach such extends as to involve breaking of the gears under normal conditions. This is due to the fact that the scraper and the drum lock up under certain conditions, so that there is no difference in speed. The gearing according to the present inention ensures that the torque transferred is not larger than permitted by the friction clutch and thus not larger than tolerable for the gears. In this manner the gearing of the decanter centrifuge is protected in the short period necessary for the control mechanism of the decanter centrifuge to disengage the drive.

## Claims

A gearing comprising an input shaft (10) and an output shaft (11) coaxially mounted and permanently connected to an input gear (12) and an output gear (13) respectively, where the input gear (12) and the output gear (13) cooperate with a number of auxiliary gear sets (15, 16), each set comprising two auxiliary gears (15, 16), with each gear being in engagement with the input gear (12) and output gear (13) respectively, as well as an auxiliary shaft (14) whereon said sets of auxiliary gears (15, 16) are mounted, wherein at least one of the auxiliary gears (15, 16) in each set of auxiliary gears is mounted on the auxiliary shaft (14) by means of a friction clutch (26).

2. A gearing as in claim 1, characterised in that the sets of auxiliary gears (15, 16) are mounted with the same mutual angular distance around the common axis of rotation of the input shaft (10) and the output shaft (11) and along a circle concentric therewith.

3. A gearing as in claim 1 or 2, characterised in that the auxiliary shaft (14) of the auxiliary gears (15, 16) is permanently connected to a casing, said casing being rotatably mounted around the common axis of rotation of the input shaft (10) and the output shaft (11) and provided with a separate drive.

4. Use of a gearing as in claim 1, 2 or 3 as a reduction gear in a decanter centriguge.

Fig. 1

0 271 898

Fig.2

## DOCUMENTS CONSIDERED TO BE RELEVANT

EP 87118663.1

| Category | Citation of document with indication. where appropriate, of relevant passages | Relevant to claim | CLASSIFICATION OF THE APPLICATION (Int. Cl 4) |
|---|---|---|---|
| D,Y | US - A - 3 530 733 (HEIDRICH) <br> * Totality * <br> -- | 1-3 | F 16 H 1/36 |
| Y | DE - A1 - 3 037 890 (MAYR) <br> * Totality * <br> -- | 1-3 | |
| A | H. KLEIN "Die Planetenrad-Umlaufrädergetriebe", 1962 <br> CARL HANSER VERLAG, München page 28 <br> * Page 28; fig. 5 * <br> -- | 1-3 | |
| A | EP - A1 - 0 166 008 (BAUSANO) <br> * Fig. 2 * <br> ---- | 1-4 | |

TECHNICAL FIELDS
SEARCHED (Int Cl 4)

F 16 H   1/00
F 16 H   3/00
F 16 H   9/00
F 16 H 37/00
F 16 H 57/00
F 16 D   7/00

The present search report has been drawn up for all claims

| Place of search | Date of completion of the search | Examiner |
|---|---|---|
| VIENNA | 25-02-1988 | HEMMELMEIER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82